# DEMANDE DE BREVET EUROPEEN

(11) **EP 3 150 493 A1**
(43) Date de publication de la demande: **05.04.2017**
(21) Numéro de dépôt: 16185544.0
(22) Date de dépôt: 28.02.2014
(51) Int. Cl.: B64D 3/00, G01V 3/16

(54) **PLATEFORME AÉROPORTÉE POUR AÉRONEF COMPORTANT DES MOYENS CORRECTEURS D'ASSIETTE ET ATTELAGE ASSOCIÉ**

(62) Demande divisionnaire de: 14750523.4
(71) Demandeur: Action Communication, 83390 Cuers (FR)
(72) Inventeur: GIORDANA, Alexis, 83390 PIERREFEU (FR)
(74) Mandataire: Marchand, André

(57) **Abrégé**

L'invention concerne un attelage comportant un aéronef (P), un câble de remorquage (60) et un dispositif de traîne(1), l'aéronef tractant via ledit câble de remorquage le dispositif de traîne. L'invention permet d'accrocher et de tracter une antenne (31) de grandes dimensions conservant une assiette stable horizontale voire verticale durant une campagne de mesures grâce à des moyens correcteurs automatiques d'assiette (10) ainsi que de moyens d'accroche mâles et femelles (40, 50) particulièrement astucieux. Une connexion électrique entre des moyens de mesures tractés (31) et l'aéronef (P) peut en outre être assurée. Un tel attelage est particulièrement adapté à la collecte de paramètres précieux dans les domaines de la prospection de ressources naturelles ou encore d'identification de vides souterrains.

## Description

L'invention concerne une plateforme aéroportée ou plus généralement un dispositif de traîne pour aéronef, tracté par ce dernier via un câble de remorquage.

Elle concerne plus particulièrement des dispositifs de traîne comportant des moyens supports d'éléments de mesure pour collecter des paramètres précieux dans les domaines de la prospection de ressources naturelles ou encore d'identification de vides souterrains.

Le domaine de la cartographie géophysique est actuellement en plein essor afin de mieux connaître l'évolution du milieu souterrain notamment l'hydrologie. Trouver de l'eau au sein de régions désertiques constitue notamment un besoin grandissant. Une telle découverte passe, par exemple, par la détection ou l'identification de réseaux de karst.

Il en est de même pour la recherche de ressources minières situées à moyennes profondeurs, c'est-à-dire en deçà de trois cents mètres de profondeur, ou encore pour identifier des gisements pétrolifères ou gazeux.

D'autres besoins ont plus récemment fait l'objet de recherches en matière de cartographie. De tels besoins concernent, à titre d'exemple non limitatif, la détection de vides souterrains pour pouvoir y stocker des ressources voire des déchets.

Pour délivrer des données en matière de cartographie géophysique, une technique consiste - selon un principe très simplifié - mesurer les variations verticales et horizontales de la résistivité électrique du sous-sol. Pour cela, le principe consiste à émettre depuis une antenne aérienne émettrice, telle qu'une boucle ou une bobine, des impulsions électriques en direction du sol, plus précisément du sous-sol, que l'on souhaite étudier. Il se crée alors un champ magnétique primaire. Une coupure brutale dudit champ magnétique primaire génère des courants de Foucault, d'autant plus intenses que les formations présentes dans ledit sous-sol sont conductrices. Ces courants induits créent, à leur tour, un champ magnétique secondaire. Ce champ est mesuré par une antenne réceptrice, telle qu'une bobine ou boucle, puis analysé afin de déterminer la résistivité desdites formations présentes.

Pour véhiculer sur site de tels moyens de mesures, certains constructeurs ou opérateurs ont équipé des avions en les dotant d'antennes électromagnétiques cerclant lesdits avions. Une telle antenne comporte une ou plusieurs boucles émettrices et/ou réceptrices d'ondes électromagnétiques. L'antenne est constituée en arrimant un conducteur électrique à l'avant de l'aéronef - via des moyens prolongateurs pour éloigner ledit conducteur du cockpit et étendre ainsi le périmètre de l'antenne - aux extrémités des ailes et à l'arrière du fuselage de l'appareil. Ainsi, l'antenne s'apparente essentiellement à un losange dont les diagonales sont définies par la voilure et le fuselage de l'aéronef. Il est donc nécessaire d'utiliser des avions présentant une envergure conséquente pour véhiculer une antenne de taille suffisante pour collecter des informations terrain, par exemple un quadrimoteur de type Bombardier Dash-7. L'assiette de l'antenne étant sensiblement celle de l'avion qui la véhicule, il est requis - sauf à utiliser des calculs complexes pour tenir compte de l'incidence de l'antenne au regard du sol - de maintenir l'appareil parfaitement à plat lors de la collecte des données. Pour maintenir une telle assiette sensiblement horizontale, un avion doit évoluer à une vitesse relativement élevée. En deçà, l'appareil présente une incidence forte, c'est-à-dire qu'il relève « le nez » comme en configuration d'atterrissage. Or, une vitesse importante obère la qualité des mesures effectuées. Par ailleurs, le ou les conducteurs électriques formant une antenne cerclant l'avion se déforment durant le vol, ondulent voire créent des mouvements et/ou des vibrations rendant le pilotage dudit avion désagréable voire dangereux, au point de contraindre à un atterrissage inopiné ou de fortune. En outre, recourir à un avion de grand gabarit entraîne des coûts d'exploitation et de maintenance élevés, coûts aggravés également par un montage complexe et long de l'antenne cerclant l'appareil.

Pour tenter de contourner ces inconvénients, une antenne sensiblement circulaire, ou du moins circulaire par segments, a été conçue pour être héliportée et ainsi véhiculée sur site par un hélicoptère. L'aire résultante d'une telle antenne peut être clairement supérieure à celle d'une antenne cerclant un avion. En effet, les dimensions de ladite antenne ne sont plus dépendantes directement de celles de l'aéronef. Il devient ainsi possible de constituer une ou plusieurs antennes concentriques et coplanaires, coopérant avec les parties distales d'une pluralité de haubans sensiblement de même longueur dont les parties proximales sont jointes et connectées à un treuil d'un hélicoptère hélitreuillant puis véhiculant la structure ainsi constituée. Un ou plusieurs câbles électriques relient l'antenne à un calculateur embarqué dans l'appareil. La circonférence de l'antenne étant accrue, le balayage d'un site est ainsi optimisé, nécessitant moins de passages qu'avec un avion cerclé d'une antenne. En outre, la collecte des mesures peut se faire à vitesse réduite. Une telle solution soulève pourtant de nombreux inconvénients obérant la qualité des traitements des mesures collectées et maintenant des coûts d'exploitation et de maintenance élevés. En effet, le montage d'une telle structure demeure complexe et requiert une vaste aire d'assemblage. Un hélicoptère dispose en outre d'une autonomie réduite au regard de celle d'un avion, tout en présentant une consommation en carburant élevée. Le balayage d'un site étendu demeure ainsi fastidieux et imparfait. Par ailleurs, un inconvénient majeur réside dans le fait que la structure « antenne (s) haubanée (s) » se meut tel un balancier dont les oscillations répétées et aléatoires rendent l'assiette du dispositif de mesure fluctuante. Pour tenter de corriger ou d'atténuer le phénomène inévitable de balancier dans les traitements des mesures collectées, on a recours généralement à une pluralité de capteurs disposés le long de la circonférence de la structure héliportée. Toutefois, malgré une complexité calculatoire accrue, les résultats ou cartes découlant desdits traitements des mesures collectées se révèlent peu fiables et exploitables.

Par ailleurs, les ondes électromagnétiques réfléchies et capturées par une antenne réceptrice véhiculée par l'aéronef, sous la forme d'un avion cerclé ou d'un hélicoptère, réfléchissent de nouveau sur des haubans ou sur le fuselage, sur la voilure ou les pales de rotor selon l'aéronef utilisé. Ces réflexions subséquentes altèrent fortement la pertinence des mesures collectées.

Il n'existe donc pas à ce jour de solutions efficaces et économiques permettant de déplacer dans les airs un support d'antenne de grandes circonférences, c'est-à-dire dont l'aire résultante est supérieure à plusieurs centaines, voire plusieurs milliers, de mètres carrés, suivant une assiette stable et déterminée.

L'invention permet de répondre à la grande majorité des inconvénients soulevés par les solutions connues.

S'inspirant de la technique d'attelage de banderoles publicitaires tractées par de petits avions, légers et économiques, notamment au regard de ceux cerclés de boucles électromagnétiques, l'invention concerne un attelage comportant un aéronef, un câble de remorquage et un dispositif de traîne, l'aéronef tractant via ledit câble de remorquage le dispositif de traîne.

Les techniques d'accroche d'une banderole publicitaire après décollage d'un avion léger sont maîtrisées. Toutefois, les dimensions, généralement de quelques dizaines de mètres carrés, d'une banderole publicitaire sont très inférieures à celles des moyens supports d'une antenne agencée pour collecter des données géophysiques. Par ailleurs, une banderole publicitaire est tractée selon un plan sensiblement vertical et éventuellement fluctuant durant le vol. A ce jour, un tel enseignement technique n'a jamais été considéré pour être exploité dans le domaine de la collecte de mesures aériennes. Cet enseignement est en effet méconnu voire considéré manifestement comme non transposable et inapproprié en l'état pour tracter une antenne de grandes dimensions, qui plus est, devant observer une assiette stable, notamment horizontale, durant une campagne de mesures. L'invention permet de vaincre ces préjugés en dotant notamment l'attelage de moyens correcteurs automatiques d'assiette ainsi que de moyens d'accroche en plein vol mâles et femelles inédits et particulièrement astucieux. Une connexion électrique entre des moyens de mesures tractés et l'aéronef peut en outre être assurée via lesdits moyens d'accroche en plein vol.

Parmi les nombreux avantages apportés par l'invention, nous pouvons mentionner que celle-ci permet :
- d'accrocher une antenne de très grandes dimensions, par exemple de plusieurs centaines ou milliers de mètres carrés, à un avion léger après décollage dudit avion ;
- de connecter automatiquement lors de l'accroche en plein vol d'un dispositif de traîne, une antenne ou plus généralement tout capteur de mesure véhiculé par ledit dispositif de traîne à un calculateur embarqué dans l'aéronef tracteur ;
- d'agencer très simplement sur des moyens supports dont les conditionnement et déploiement sont particulièrement aisés, un ou plusieurs capteurs de mesure, limitant ainsi grandement les coûts d'assemblage et de manutention d'un dispositif de traîne selon l'invention, c'est-à-dire de dix à vingt fois moins onéreuse que l'état de l'art en matière de matériels et de personnels requis ;
- de connecter électriquement et automatiquement dès l'accrochage d'un dispositif de traîne selon l'invention à un câble de remorquage tracté par un aéronef en vol, ledit dispositif de traîne, donc éventuellement tout capteur de mesure véhiculé par ledit dispositif, à un calculateur embarqué dans l'aéronef ;
- de connecter électriquement un dispositif de traîne présentant une assiette sensiblement verticale, tel qu'à titre d'exemple non limitatif une banderole publicitaire, à un aéronef pour commander des moyens d'affichage ou pour collecter des mesures délivrées par des capteurs présents sur le dispositif de traîne, dans le but notamment d'une prospection hydrologique ;
- de privilégier un aéronef léger, sobre du point de vue énergétique et à grand rayon d'action, pour minimiser le temps nécessaire au balayage d'un site tout en minimisant les coûts d'une telle mission ;
- de collecter par une boucle électromagnétique maintenue parfaitement verticale à proximité d'une barrière rocheuse des mesures précieuses d'une grande précision, lors d'une prospection hydrogéologique par exemple ou encore pour modéliser des éboulements ;
- de collecter à l'aide d'une boucle électromagnétique maintenue parfaitement horizontale des mesures précieuses d'une grande précision, par exemple lors d'une prospection de ressources naturelles ou encore d'identification de vides souterrains ;
- d'éviter tout calcul complexe, voire toute altération des données brutes collectées, pour corriger une assiette fluctuante des capteurs de mesure selon l'art antérieur grâce à l'action de moyens correcteurs d'assiette d'un dispositif de traîne selon l'invention ;
- de supprimer toute influence négative de l'aéronef tracteur sur les données collectées par un dispositif de traîne selon l'invention grâce à l'éloignement du ou des capteurs de mesure, notamment des antennes émettrices et réceptrices d'ondes électromagnétiques, dudit aéronef, ce denier tractant le dispositif de traine à plusieurs dizaines de mètres derrière lui ;
- de supprimer l'un des inconvénients majeurs des solutions connues selon lesquelles un aéronef porteur interagit ou interfère avec une antenne aéroportée obérant ainsi la capacité de mesures multiples dudit aéronef et nécessitant donc une pluralité de passages d'aéronefs équipés de capteurs distincts, en permettant de véhiculer simultanément une pluralité de capteurs par le dispositif de traîne, décuplant la qualité, la quantité et la variété de mesures collectées durant un unique vol, factorisant ainsi les trajets de l'aéronef tracteur et par conséquent diminuant la durée et le coût d'une mission consistant à balayer un site d'intérêt.

A cet effet, l'invention concerne un dispositif de traîne comportant :
- des moyens d'accroche femelles agencés pour coopérer avec des moyens d'accroche mâles d'une partie distale d'un câble de remorquage pour aéronef,
- un mât de traction coopérant avec les moyens d'accroche femelles,
- des moyens support souples sensiblement plans lorsqu'ils sont déployés, lesdits moyens supports comportant des moyens de fixation pour coopérer avec ledit mât de traction.

Pour assurer notamment des campagnes de mesures géophysiques, voire plus généralement pour maîtriser automatiquement l'assiette des moyens supports tractés, un tel dispositif de traîne comporte en outre des moyens correcteurs d'assiette positionnés entre les moyens d'accroche femelles et le mât de traction, lesdits moyens correcteurs d'assiette maintenant automatiquement les moyens supports selon une assiette déterminée lorsque le dispositif de traîne est tracté par un aéronef.

Selon que l'on souhaite exploiter un dispositif conforme à l'invention pour prélever des mesures géophysiques le long de parois rocheuses voire pour conduire des campagnes publicitaires, l'assiette déterminée peut être sensiblement verticale. Dans ces cas, les moyens correcteurs d'assiette peuvent consister avantageusement en un mât correcteur, coopérant avec le mât de traction au moyen d'une pluralité de haubans de traction coplanaires dont les parties proximales respectives coopèrent avec le mât correcteur et dont les parties distales respectives coopèrent avec le mât de traction, les longueurs respectives desdits haubans de traction et leurs points respectifs de coopération avec lesdits mâts décrivent une symétrie axiale selon une médiatrice commune auxdits mâts.

En variante, notamment pour véhiculer des capteurs de mesures parfaitement horizontaux, l'assiette déterminée des moyens supports peut être sensiblement horizontale. Les moyens correcteurs d'assiette peuvent alors avantageusement consister en un mât correcteur dont chaque extrémité coopère avec :
- les deux extrémités du mât de traction par des premiers haubans de traction d'une même première longueur,
- la partie centrale du mât de traction par des deuxièmes haubans de traction d'une même deuxième longueur.

Qu'importe l'assiette déterminée, les moyens correcteurs d'assiette peuvent être avantageusement agencés de sorte que le mât correcteur coopère avec les moyens d'accroche femelles par des haubans d'accroche dont les extrémités distales coopèrent respectivement avec le mât correcteur, les extrémités proximales desdits haubans étant réunies et coopérant mutuellement avec la partie distale d'un câble d'accroche dont la partie proximale coopère avec les moyens d'accroche femelles.

Les moyens correcteurs d'assiette selon l'invention peuvent permettre en outre de régler l'altitude relative des moyens supports au regard de celle du câble de remorquage. A titre d'exemple non limitatif, les longueurs respectives des haubans d'accroche peuvent être mutuellement déterminées pour que le mât correcteur soit automatiquement positionné puis maintenu vertical lorsque le dispositif de traîne est tracté par un aéronef. Par ailleurs, les longueurs respectives des haubans d'accroche peuvent en outre être déterminées pour définir une altitude relative donnée de l'axe longitudinal des moyens supports par rapport à celle de la partie distale du câble d'accroche.

Pour faciliter l'assemblage et la maintenance d'un dispositif de traîne selon l'invention, le mât correcteur peut consister en une structure tubulaire creuse comportant des ouvertures. Les haubans d'accroche peuvent en outre consister en un même filin coopérant avec le mât correcteur via lesdites ouvertures, les longueurs respectives des haubans d'accroche ainsi constitués étant déterminées par nouage du filin ou par des moyens limiteurs de course. Le mât de traction peut en outre consister en une structure tubulaire creuse comportant des ouvertures. Les haubans de traction peuvent alors consister en un même filin coopérant avec lesdits mâts via lesdites ouvertures, les longueurs respectives des haubans de traction ainsi constitués étant déterminées par nouage du filin ou par des moyens limiteurs de course.

Pour favoriser une assiette plane et supprimer les ondulations des moyens supports durant le vol, les moyens supports peuvent consister avantageusement en un tissu amortisseur aérodynamique micro-perforé. Les moyens supports peuvent en outre comporter des moyens amortisseurs positionnés à l'opposé du mât de traction, lesdits moyens amortisseurs présentant une structure micro-perforée.

Pour réaliser des campagnes de mesures, par exemple géophysiques, les moyens supports peuvent véhiculer un élément de mesure consistant en une antenne sous la forme d'une ou plusieurs boucles agencées pour émettre des signaux électromagnétiques. Lesdits moyens supports peuvent en outre véhiculer un élément de mesure consistant en un ou plusieurs capteurs ou sondes.

Pour assurer une communication électrique filaire entre l'aéronef tracteur et un élément de mesure véhiculé par le dispositif de traîne, ledit élément de mesure peut être connecté à un bus de communication filaire dont la partie proximale coopère avec les moyens d'accroche femelles sous la forme d'un ou plusieurs connecteurs électriques.

Pour que le dispositif de traîne puisse collecter des mesures, les moyens supports peuvent véhiculer une antenne pour recevoir des signaux électromagnétiques. En variante ou en complément, les moyens correcteurs d'assiette peuvent véhiculer une antenne pour recevoir des signaux électromagnétiques.

Pour assurer une communication électrique entre l'aéronef et une antenne pour recevoir des signaux électromagnétiques, ladite antenne étant véhiculée par le dispositif de traîne, celle-ci peut être avantageusement connectée à un bus de communication filaire dont la partie proximale comporte un ou plusieurs connecteurs électriques et coopère avec les moyens d'accroche femelles.

Pour véhiculer un tel bus de communication filaire, le câble d'accroche peut avantageusement enceindre la partie proximale du bus de communication. En variante, ledit câble d'accroche peut consister en une structure fibreuse, la partie proximale du bus de communication étant entrelacée avec les fibres dudit câble.

Pour permettre l'accrochage du dispositif de traîne par la crosse d'un câble de remorquage, les moyens d'accroche femelles peuvent comporter avantageusement un élément conique creux. La paroi externe de l'élément conique des moyens d'accroche femelles peut en outre comporter un fourreau agencé pour recevoir l'extrémité ou tête de la partie proximale du câble d'accroche, ladite partie proximale étant agencée sous la forme d'une boucle fermée.

En variante, les moyens d'accroche femelles peuvent comporter un membre en chevron présentant deux feuillets et un fourreau agencé pour recevoir l'extrémité ou tête de la partie proximale du câble d'accroche, ladite partie proximale étant agencée sous la forme d'une boucle fermée, lesdits feuillets coopérant avec ledit fourreau.

Pour assurer une connexion électrique, des connecteurs électriques peuvent avantageusement déboucher de la paroi interne desdits feuillets du membre en chevron, cette dernière étant diélectrique.

De plus, les moyens d'accroche femelles peuvent en outre comporter des moyens d'attache à un câble de tension.

En variante ou en complément, les moyens d'accroche femelles peuvent comporter des connecteurs électriques débouchant de la paroi interne de l'élément conique, cette dernière étant diélectrique.

Pour exploiter un dispositif de traîne selon l'invention, cette dernière concerne en outre un câble de remorquage pour aéronef dont la partie distale est adaptée pour comporter des moyens d'accroche mâles sous la forme d'une platine, agencée pour coopérer avec les moyens d'accroche femelles dudit dispositif de traîne.

Pour assurer une mise en communication électrique de l'aéronef avec un dispositif de traîne selon l'invention, ladite platine peut être avantageusement conique comportant des connecteurs électriques débouchant de la paroi externe diélectrique de ladite platine, lesdits connecteurs électriques consistant en la partie distale d'un bus de communication véhiculé par ledit câble de remorquage. Lesdits connecteurs électriques peuvent consister respectivement en des anneaux concentriques disjoints.

Selon un deuxième mode de réalisation, les moyens d'accroche mâles d'un câble de remorquage selon l'invention peuvent comporter en outre une crosse montée mobile sur la partie distale du câble de remorquage. Ils comportent en outre un talon monté fixe à l'extrémité de ladite partie distale du câble de remorquage. Selon un tel agencement, la platine peut être avantageusement un membre en chevron, comportant deux feuillets dont le sommet est fixé à la crosse de sorte que le talon puisse coulisser au sein de la platine sous l'action de la traction du câble de remorquage jusqu'à prendre appui contre le sommet interne de ladite platine.

Selon un troisième mode de réalisation, lesdits moyens d'accroche mâles peuvent comporter une crosse montée mobile sur la partie distale du câble de remorquage et un talon monté fixe à l'extrémité de ladite partie distale du câble de remorquage. La platine peut consister en un membre en chevron comportant deux feuillets dont le sommet extérieur constitue la crosse de sorte que le talon puisse coulisser au sein de la platine sous l'action de la traction du câble de remorquage jusqu'à prendre appui contre le sommet interne de ladite platine.

Selon ces deux derniers modes de réalisation, pour assurer une connexion électrique, la platine peut comporter des connecteurs électriques débouchant de la paroi externe diélectrique des feuillets de ladite platine, lesdits connecteurs électriques consistant en la partie distale d'un bus de communication véhiculé par ledit câble de remorquage.

Pour prévenir tout risque de défaillances mécaniques ou électriques lors la phase d'accrochage d'un dispositif de traîne à un aéronef, les moyens d'accroche mâles d'un câble de remorquage conforme à l'invention peuvent comporter avantageusement des moyens amortisseurs d'accrochage. Ces derniers absorbent une partie de la force de traction du câble remorquage lors de la coopération entre les moyens d'accroche respectifs du dispositif de traîne et dudit câble de remorquage.

De tels moyens amortisseurs d'accrochage peuvent consister avantageusement en un vérin pneumatique ou hydraulique dont le cylindre est monté fixe sur le talon de moyens d'accroche mâles selon lesdits deuxième et troisièmes mode de réalisation. Le piston peut alors être monté fixe sur la crosse desdits moyens d'accroche mâles.

Pour maîtriser et/ou réguler la capacité d'absorption du vérin et diminuer le poids du dispositif de traîne en vol, le cylindre du vérin peut être préalablement empli d'un fluide. Le cylindre peut en outre comporter une ou plusieurs ouvertures au travers desquelles le fluide compressé est expulsé sous l'action du piston.

L'invention concerne par ailleurs tout attelage comportant un aéronef, un câble de remorquage et un dispositif de traîne, l'aéronef tractant le dispositif de traîne via ledit câble de remorquage, les moyens d'accroche mâles du câble de remorquage coopérant avec les moyens d'accroche femelles dudit dispositif de traîne, lesdits moyens d'accroche mâles et femelles étant conformes à l'invention.

L'aéronef peut en outre comporter un calculateur pour générer et interpréter des signaux électromagnétiques, lesdits signaux étant acheminés par bus de communication, émis et réceptionnés par un élément de mesure véhiculé par le dispositif de traîne.

L'invention concerne enfin une aire d'accrochage inédite permettant l'accrochage d'un dispositif de traîne selon l'invention par un aéronef en plein vol. Lorsque la partie proximale d'un câble d'accroche dudit dispositif de traîne forme une boucle fermée dont la tête coopère avec les moyens d'accroche femelles dudit dispositif de traîne, une telle aire d'accrochage comporte trois poteaux mutuellement positionnés pour former un triangle. Les deux poteaux format la base dudit triangle comportent des attaches ou des guides pour coopérer respectivement avec les brins de la partie proximale du câble d'accroche. Le poteau constituant le sommet du triangle coopère quant à lui avec l'extrémité proximale du câble de tension.

D'autres caractéristiques et avantages apparaîtront plus clairement à la lecture de la description qui suit se rapportant à un exemple de réalisation donné à titre indicatif et non limitatif et à l'examen des figures qui l'accompagnent parmi lesquelles :
- les figures 1a et 1b décrivent respectivement un aéronef tractant via un câble de remorquage un dispositif de traîne conforme à l'invention selon des assiettes horizontale et verticale ;
- la figure 2 décrit un dispositif de traîne conforme à l'invention, agencé pour présenter une assiette stable sensiblement horizontale durant le vol ;
- les figures 3a et 3b présentent respectivement les moyens correcteurs d'assiette d'un dispositif selon l'invention en phase de décollage puis en vol, lesdits moyens correcteurs d'assiette étant agencés pour maintenir une assiette sensiblement horizontale durant la campagne de mesure ;
- la figure 3c décrit une vue latérale simplifiée d'un dispositif de traîne selon l'invention présentant une assiette horizontale ;
- la figure 4 décrit un dispositif de traîne selon l'invention comportant des moyens correcteurs d'assiette pour maintenir les moyens supports dudit dispositif verticaux.
- la figure 5 décrit une aire d'accrochage d'un dispositif de traîne selon l'invention ;
- les figures 6a et 6b décrivent un premier mode de réalisation de moyens d'accroche femelles d'un dispositif de traîne conforme à l'invention, respectivement vus de dessus et de dessous ;
- les figures 7a et 7b décrivent un premier mode de réalisation de moyens d'accroche mâles d'un câble de remorquage selon l'invention ;
- les figures 7c et 7d décrivent une variante dudit premier mode de réalisation de moyens d'accroche mâles d'un câble de remorquage selon l'invention, lesdits moyens d'accroche mâles comportant des moyens amortisseurs d'accrochage et étant agencés pour coopérer avec des moyens d'accroche femelles tels que décrit à titre d'exemple par les figures 6a et 6b ;

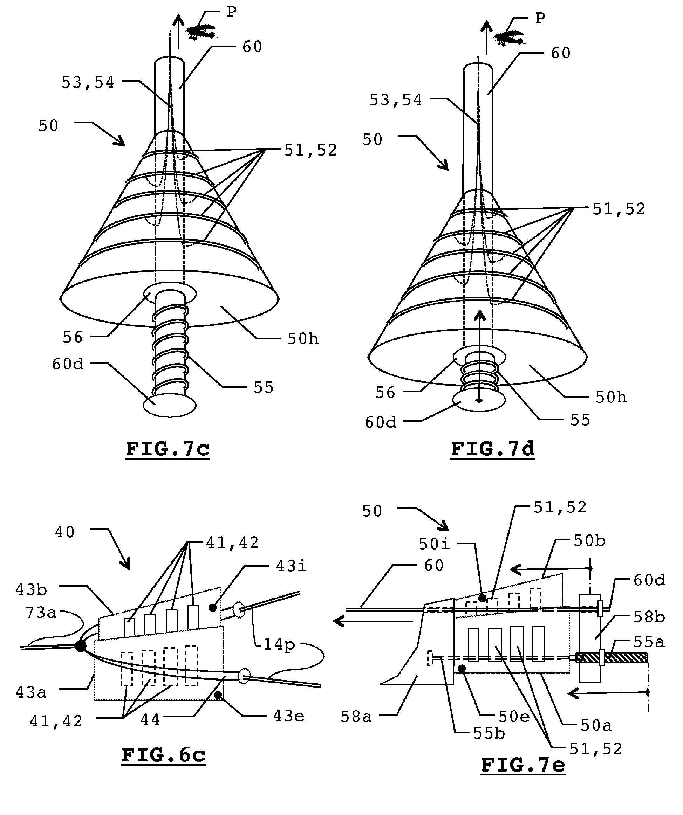

- la figure 6c décrit un deuxième mode de réalisation de moyens d'accroche femelles d'un dispositif de traîne conforme à l'invention ;
- la figure 7e décrit un deuxième mode de réalisation de moyens d'accroche mâles d'un câble de remorquage selon l'invention, lesdits moyens d'accroche mâles comportant des moyens amortisseurs d'accrochage et étant agencés pour coopérer avec des moyens d'accroche femelles tels que décrit à titre d'exemple par la figure 6c ;

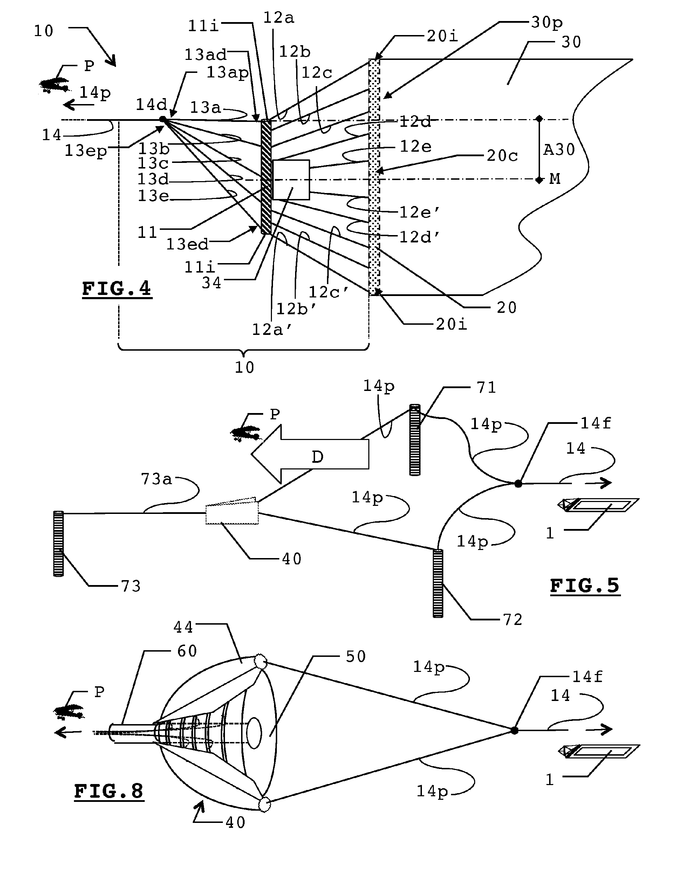

- la figure 8 décrit la coopération entre des moyens d'accroche mâles et femelles après arrimage d'un dispositif de traîne à un câble de remorquage selon l'invention.

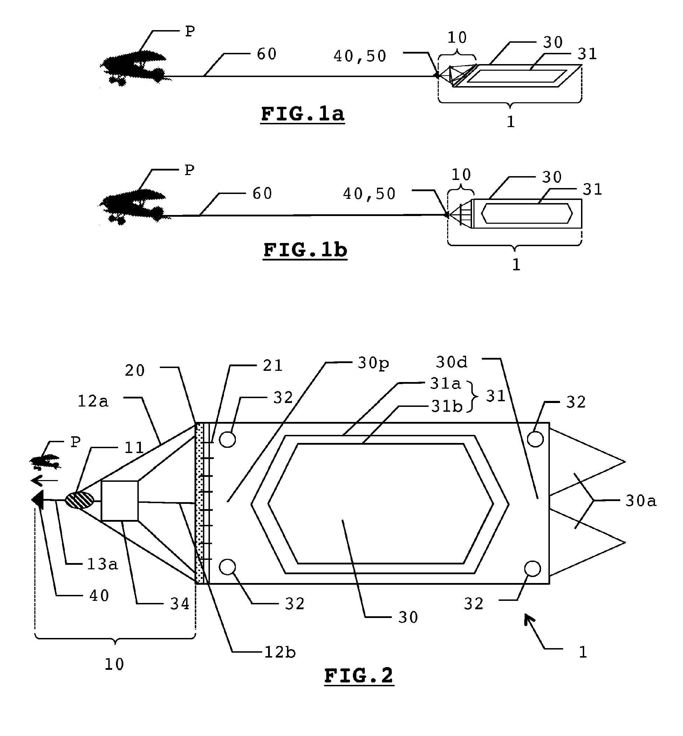

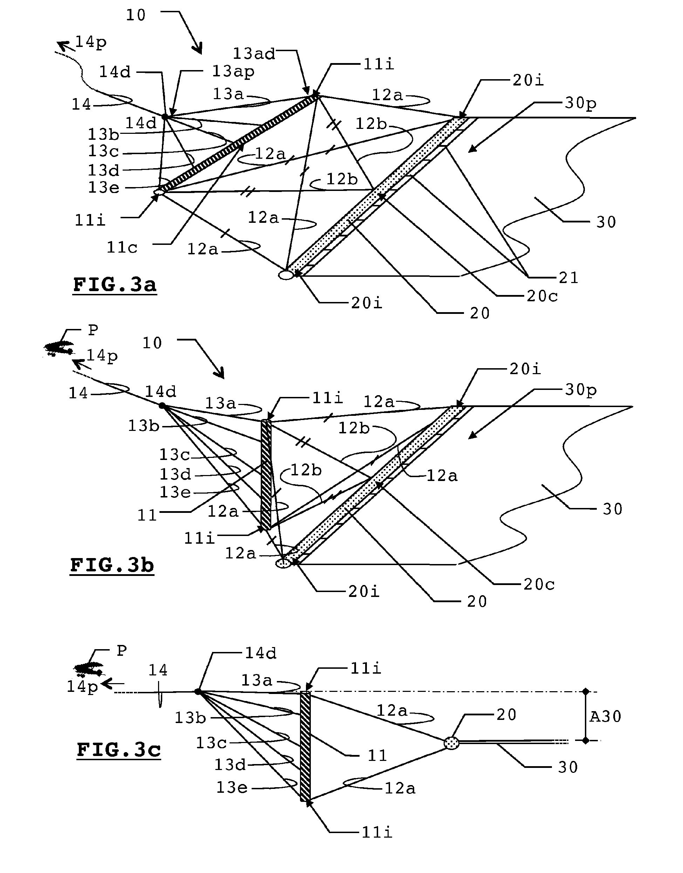

La figure 1a décrit une représentation simplifiée d'un attelage conforme à l'invention pour lequel un aéronef P, par exemple un avion prévu pour tracter une banderole publicitaire, remorque via un câble de remorquage 60, long de plusieurs dizaines de mètres, un dispositif de traîne 1 selon un premier mode de réalisation de l'invention. Un tel dispositif comporte principalement des moyens supports 30 sensiblement plans après déploiement, véhiculant un capteur de mesure 31, par exemple une antenne émettrice d'ondes électromagnétiques. Afin de collecter des mesures géophysiques pertinentes, un tel dispositif de traîne 1 comporte des moyens correcteurs d'assiette 10 agencés pour maintenir des moyens supports 30 selon une assiette sensiblement constante et horizontale. De tels moyens 10 seront décrits plus précisément selon un mode de réalisation préféré en liaison avec les figures 3a à 3c.

De la même manière, la figure 1b illustre une représentation simplifiée d'un attelage conforme à l'invention pour lequel un aéronef P, tel que par exemple un avion prévu pour tracter une banderole publicitaire, remorque via un câble de remorquage 60, long de plusieurs dizaines de mètres, un dispositif de traîne 1 selon un deuxième mode de réalisation de l'invention. A l'instar du précédent dispositif de traîne, le dispositif selon la figure 1b comporte principalement des moyens supports 30 sensiblement plans après déploiement, véhiculant un capteur de mesure 31, par exemple une antenne émettrice d'ondes électromagnétiques. Afin de collecter des mesures géophysiques pertinentes le long d'une barrière rocheuse par exemple, un tel dispositif de traîne 1 comporte des moyens correcteurs d'assiette 10 agencés pour maintenir des moyens supports 30 selon une assiette sensiblement constante et verticale. De tels moyens 10 seront décrits plus précisément selon un mode de réalisation préféré en liaison avec la figure 4.

Ces deux modes de réalisation d'un attelage selon l'invention permettent de prévenir toutes interactions ou incidences de l'aéronef P sur les mesures collectées par les moyens de mesures 31 présents sur les moyens supports 30, car ces deniers sont tractés par ledit aéronef à plusieurs dizaines de mètres derrière lui.

La figure 2 permet de décrire plus précisément un dispositif de traîne 1 selon l'invention.

Ce dernier comporte des moyens d'accroche femelles 40, agencés pour coopérer avec des moyens d'accroche mâles (ou crosse) d'une partie distale d'un câble de remorquage pour aéronef, non représenté sur la figure 2.

Un tel dispositif de traîne 1 comporte des moyens supports souples 30 sensiblement plans lorsqu'ils sont déployés. Les moyens 30 peuvent avantageusement consister en un tissu, voire un assemblage de tissus avantageusement micro-perforé(s). Ce type de matériau est notamment utilisé pour constituer le corps principal de certaines banderoles publicitaires tractées. Compte tenu de la superficie de moyens supports 30 tractés, pouvant aller jusqu'à plusieurs centaines de mètres carrés, un tel tissu sera sélectionné pour présenter un certain nombre de caractéristiques, parmi lesquelles nous pouvons mentionner de manière non exhaustive, une grande résistance à l'étirement et une structure agencée de sorte que les moyens supports 30 ne faseyent que peu ou pas durant le vol. De manière préférée, on aura recours à un tissu assurant une fonction d'amortisseur aérodynamique. La configuration des moyens supports 30 décrite ci-après est sensiblement celle d'un quadrilatère, notamment un rectangle. Toutefois, les moyens 30 pourraient tout aussi bien décrire d'autres formes géométriques planes, telles qu'un disque, un triangle, etc.

En liaison avec la figure 2, les moyens supports 30 décrivent un rectangle plan, d'une longueur comprise entre quarante à soixante mètres et d'une largeur de quinze à vingt-cinq mètres, dont la partie proximale 30p coopère avec un mât de traction 20. La longueur dudit mât de traction est sensiblement celle de la largueur du bord d'attaque de la partie proximale 30p des moyens supports 30. A titre d'exemple, ladite partie proximale peut comporter une série d'ouvertures avantageusement renforcées, par exemple des oeillets métalliques. De même, le mât de traction 20 peut être une structure cylindrique creuse, avantageusement à section transversale ovoïde, biconvexe symétrique pour présenter un bord de fuite effilé, comportant des ouvertures en miroir des ouvertures de la partie proximale des moyens support 30c afin que des attaches 21, telles que des cordes ou câbles, arriment le mât de traction à ladite partie proximale 30p des moyens supports 30. En variante, le mât de traction peut être plein et comporter des anneaux saillants au sein desquels les attaches coopèrent. Les moyens d'attache 21 peuvent en outre consister en un seul et même filin, serpentant, tel un lacet, d'une ouverture du mât de traction à une ouverture de la partie proximale 30p des moyens supports. Selon un troisième mode de réalisation, la partie proximale 30p des moyens supports comporte un fourreau prévu pour accueillir ledit mât de traction 20. Tout autre coopération de ce dernier avec la partie proximale des moyens supports 30 pourraient être également envisagée. Durant le stockage ou le conditionnement du dispositif de traîne selon l'invention, les moyens supports 30 peuvent être enroulés, pliés, ferlés pour en réduire l'encombrement. Dans le cas où les moyens support 30 présenteraient une partie proximale 30p dont le bord d'attaque est courbe ou en « < », le mât de traction 20 peut présenter une forme également courbe ou en « < ». En variante, le mât de traction peut demeurer sensiblement sous la forme d'un cylindre rectiligne. Dans ce cas, les attaches 21 assurent la liaison entre les moyens supports 30 et ledit mât de traction 20 afin que l'axe longitudinal des moyens supports 30 se confonde avec la médiatrice du mât de traction 20.

Pour maintenir, après accrochage du dispositif de traîne à un aéronef par le biais d'un câble d'accrochage doté d'une crosse, correspondant aux moyens d'accrochage mâles, une assiette stable et prédéterminée d'un dispositif de traîne 1 selon l'invention, celui-ci comporte avantageusement des moyens correcteurs d'assiette 10 coopérant avec le mât de traction 20 et s'intercalant avec les moyens d'accroche femelle 40. Nous étudierons plus en détails l'agencement de tels moyens correcteur d'assiette notamment en liaison avec les figures 3a à 3c et 4. Lesdits moyens correcteurs 10 comportent avantageusement un mât correcteur 11, sensiblement cylindrique dont la structure peut être identique ou similaire à celle du mât de traction. Les moyens correcteurs d'assiette 10 coopèrent selon une liaison filaire avec le mât de traction 20 à l'aide d'une pluralité de haubans de traction 12a, 12b. Le mât correcteur 11, quant à lui, coopère avantageusement avec les moyens d'accroche femelles 40 selon une liaison filaire par un ou plusieurs haubans d'accroche 13a. Selon l'exemple décrit en liaison avec la figure 2, une antenne réceptrice d'ondes électromagnétiques peut être positionnée au sein du maillage des haubans de traction 12a et 12b. Elle peut en outre être attachée aux moyens correcteurs 10 par tous autres moyens. Elle pourrait, en variante, être véhiculée par les moyens supports 30 à l'instar de l'antenne 31. Ces derniers peuvent par ailleurs véhiculer une pluralité d'antennes émettrices et/ou réceptrices 31a, 31b voire encore d'autre capteurs de mesure 32 comme par exemple, de manière non exhaustive, des altimètres ou radioaltimètres pour compléter une campagne de mesure. Lesdits capteurs 31, 32 peuvent être fixés par touts moyens sur les faces supérieure ou inférieure des moyens supports 30, par exemple par couture, collage, sertissage, etc. Une antenne 31 peut également résulter de fibres conductrices tissées parmi d'autres fibres non conductrices, ces dernières constituant, quant à elles, les moyens supports 30. Elle peut en outre être constituée d'une ou plusieurs bandes de métal conducteur, tel que de manière non limitative l'aluminium, contrecollées sur les moyens supports 30. De telles bandes, avantageusement de faibles épaisseurs, allègent le poids de la structure.

Selon la figure 2, lesdits moyens support 30, plus précisément la partie distale 30d de ces derniers, peuvent avantageusement coopérer avec une ou plusieurs traînes 30a, à titre d'exemple non limitatif, sous la forme d'un ou plusieurs triangles. Cette ou ces traînes 30a peuvent être fixées à la partie distale 30d par tous moyens tels que, avantageusement et non limitativement des points de couture ou des attaches. En variante, la partie distale des moyens supports 30 et la ou les traînes peuvent consister en une seule entité. Avantageusement, une traîne 30a peut comporter ou consister en un ou plusieurs tissus micro-perforés ou tout autre matériau ayant des caractéristiques d'amortisseur aérodynamique. Le dispositif de traine faseye moins sous la fonction d'une traîne 30a. Selon un mode de réalisation préféré, le tissu principal constituant les moyens supports 30 est particulièrement léger. Il peut avoir une masse surfacique de l'ordre de 0,50g/m² à 0,80g/m². Il peut en outre être micro-perforé dont les perforations sont de l'ordre de 0,20mm à 0,40mm. Il en est de même pour le tissu d'une traîne 30a. Sa masse surfacique peut être similaire à celle du tissu principal. Un tel tissu peut être micro-perforé dont les performations sont par exemple de l'ordre de 0,30mm à 0,50mm. Le poids d'un dispositif de traîne est particulièrement faible au regard de ses dimensions. Cela permet lui confère un gage de sécurité, notamment lors d'un survol de zones habitées, et ne pénalise en rien les capacités de vol de l'aéronef.

Les figures 3a, 3b et 3c permettent de détailler un mode de réalisation préféré de moyens correcteurs d'assiette 10 d'un dispositif de traîne selon l'invention. La figure 3a décrit lesdits moyens lorsque le dispositif de traine est au sol, en attente d'être accroché à un aéronef P. En revanche, les figures 3b et 3c, respectivement des vues en perspectives et en coupe longitudinale, décrivent les mêmes moyens lorsque le dispositif de traîne 1 est tracté par un aéronef P. L'agencement décrit par ces figures 3a à 3c est tel que les moyens supports 30, et par voie de conséquence le ou les capteurs véhiculés (non représentés sur lesdites figures) décrivent une assiette stable et horizontale.

Selon ce mode de réalisation, les moyens supports sont sensiblement rectangulaires dont la partie proximale 30p présente un bord d'attaque sensiblement rectiligne. Ce bord d'attaque coopère avec un mât de traction 20 sensiblement cylindrique dont la longueur est sensiblement identique à celle dudit bord d'attaque. Selon la figure 3a, les attaches 21 arrimant le mât de traction aux moyens supports 30 consistent avantageusement en un filin unique « laçant » les deux éléments 20 et 30, les extrémités dudit filin étant nouées respectivement aux extrémité 20i du mât de traction 20. Ce dernier peut être profilé, c'est-à-dire présenter une section ovoïde facilitant sa pénétration dans l'air. Les moyens correcteurs d'assiette 10 comportent un mât correcteur 11 dont les configurations sont proches de celles du mât de traction. Un tel mât correcteur 11 peut être cylindrique et sa section transversale peut être profilée pour faciliter sa pénétration dans l'air. Chaque extrémité 11i coopère avec les deux extrémités 20i du mât de traction 20 par des premiers haubans de traction 12a d'une même première longueur L12a. Chaque extrémité 11i du mat correcteur 11i coopère en outre avec la partie centrale 20c du mât de traction 20 par des deuxièmes haubans de traction 12b d'une même deuxième longueur L12b. La première longueur déterminée L12a est représentée schématiquement par « / » apposé sur les haubans 12a. De la même manière la deuxième longueur L12b est représentée schématiquement par un double « / » apposé sur les haubans 12b.

Le mât correcteur 11 coopère avec les moyens d'accroche femelles (non représentés sur les figures 3a, 3b, et 3c) par une pluralité de haubans d'accroche. A titre d'exemple, en liaison avec lesdites figures 3a à 3c, cinq haubans d'accroche 13a, 13b, 13c, 13d et 13e dont les extrémités distales respectives 13ad, 13bd, 13cd, 13dd et 13ed coopèrent respectivement avec le mât correcteur 11 : selon cet exemple, le long de ce dernier, c'est-à-dire depuis ses extrémités 11i vers sa partie centrale 11c. Les extrémités proximales 13ap, 13bp, 13cp, 13dp et 13ep desdits haubans d'accroche sont quant à elles avantageusement réunies en un point 14d et coopèrent mutuellement avec la partie distale 14d d'un câble d'accroche 14, dont la partie proximale 14p coopère avec les moyens d'accroche femelles. Les longueurs respectives L13a, L13b, L13c, L13d et L13e des haubans d'accroche 13a, 13b, 13c, 13d et 13e sont mutuellement déterminées pour que le mât correcteur 11 soit automatiquement positionné puis maintenu vertical lorsque le dispositif de traîne est tracté par un aéronef, comme l'indique les figures 3b et 3c. Pour favoriser le positionnement vertical du mât correcteur, ce dernier peut avantageusement comporter un lest. Une des extrémités 11i peut ainsi être alourdie au regard de la seconde extrémité. Si le mât correcteur 11 est creux, le lest peut en outre être monté mobile au sein dudit mât pour se positionner automatiquement à proximité de l'extrémité 11i inférieure. L'apport fonctionnel des haubans d'accroche agencés conformément à l'invention permet de réduire très fortement le poids nécessaire audit lest.

En outre, les longueurs respectives L13a, L13b, L13c, L13d et L13e des haubans d'accroche sont déterminées pour définir une altitude relative donnée A30 de l'axe longitudinal des moyens supports 30 par rapport à la partie distale 14d du câble d'accroche 14, comme l'indique la vue latérale décrite par la figure 3c. Il est ainsi possible de maintenir les moyens supports 30 dans une veine d'air créée par le vent relatif généré par la traction du dispositif de traîne. Ainsi, l'altitude desdits moyens est particulièrement stabilisée.

En effet, si les longueurs des haubans d'accroche sont telles que ces derniers décrivent une symétrie selon la médiatrice du mât 11, l'altitude A30 est nulle. En revanche, comme l'indique la figure 3c, si lesdites longueurs L13a, L13b, L13c, L13d et L13e sont telles que le hauban 13a est le plus court, et les longueurs des haubans 13b, 13c, 13d et 13e sont croissantes, alors l'altitude des moyens 30 est plus basse que celle du câble d'accroche 14. On peut en conséquence régler l'altitude relative de l'axe longitudinal des moyens supports 30 par rapport à la partie distale 14d du câble d'accroche 14, tout en maintenant ledit mât 11 sensiblement vertical.

Compte tenu des longueurs respectives L13a, L13b, L13c, L13d et L13e des haubans d'accroche ainsi que celles L12a et L12b des haubans de traction, sous l'action de la traction de l'aéronef P, le mât correcteur 11 se dresse en position verticale automatiquement et le mât de traction se place en position horizontale, également automatiquement selon une assiette dont l'altitude relative A30 au regard du câble d'accroche, donc du câble de remorquage et par voie de conséquence de l'aéronef P, est déterminée.

A l'instar des attaches 21, les haubans d'accroche et/ou les haubans de traction peuvent consister en des cordes ou câbles distincts. Ils peuvent en outre consister en un seul filin d'accroche 13 et/ou un seul filin de traction 12, lesdits filins coopérant avec le mât correcteur et/ou le mât de traction 20 via des ouvertures aménagées dans les mâts, ces derniers étant des structures tubulaires creuses, voire comportant des accroches (ou anneaux) saillantes. Les longueurs respectives L13a, L13b, L13c, L13d, L13e des haubans d'accroche 13a, 13b, 13c, 13d, 13e et/ou les longueurs L12a et L12b des haubans de traction 12a et 12b peuvent être précisément déterminées par nouage des filins 13 et 12 ou par l'utilisation de moyens limiteurs de course positionnés sur lesdits filins. Selon l'exemple décrit en liaison avec les figures 3a à 3c, la longueur du mat de traction est de l'ordre de vingt mètres. Le mât correcteur peut être plus court, par exemple de l'ordre de quatre à six mètres. Toutes autres dimensions pourraient être retenues selon la taille des moyens supports 30 que l'on souhaite tracter.

La figure 4 permet de détailler un deuxième mode de réalisation préféré de moyens correcteurs d'assiette 10 d'un dispositif de traîne selon l'invention. La figure 4 décrit un agencement d'attelage, dont des moyens supports 30 et par voie de conséquence le ou les capteurs véhiculés (non représentés sur ladite figure 4) présentent une assiette stable et verticale. Selon ce mode de réalisation, lesdits moyens supports 30 sont sensiblement rectangulaires et leur partie proximale 30p présente un bord d'attaque sensiblement rectiligne. Ce bord d'attaque consiste en un fourreau transversal, au sein duquel est inséré un mât de traction 20, sensiblement cylindrique, dont la longueur est sensiblement identique à celle dudit bord d'attaque. En variante, à l'instar de l'exemple décrit en liaison avec la figure 3a, ledit mât de traction 20 pourrait coopérer avec le bord d'attaque 30p par des attaches 21, consistant avantageusement en un filin unique « laçant » les deux éléments 20 et 30. Les extrémités dudit filin sont nouées respectivement aux extrémités 20i du mât de traction 20. Ce dernier peut être profilé, c'est-à-dire présenter une section ovoïde facilitant sa pénétration dans l'air.

Les moyens correcteurs d'assiette 10 comportent un mât correcteur 11 dont la configuration est proche de celle du mât de traction 20. Il peut être cylindrique et sa section transversale peut être profilée pour faciliter sa pénétration dans l'air. Le mât correcteur 11 coopère au moyen d'une pluralité de haubans de traction coplanaires 12a, 12b, 12c, 12d, 12e, 12e', 12d', 12c, 12b', 12a' avec le mât de traction 20, via des ouvertures idoines aménagées dans le fourreau 30p. Les parties distales respectives desdits haubans coopèrent avec le mât correcteur 11 et les parties proximales respectives coopèrent avec le mât de traction 20. Les longueurs respectives desdits haubans de traction et leurs points respectifs de coopération avec lesdits mâts 11 et 20 décrivent une symétrie axiale selon une médiatrice M commune auxdits mâts. Ainsi les longueurs L12a, L12b, L12c, L12d et L12e des haubans de traction 12a, 12b, 12c, 12d et 12e sont respectivement égales aux longueurs L12a', L12b', L12c', L12d' et L12e' des haubans de traction 12a', 12b', 12c', 12d' et 12e'. Selon un exemple de configuration préférée, le mât de traction 20 et le mât correcteur 11 ont des longueurs respectives de vingt mètres et de cinq mètres. Les mâts 20 et 11 sont ainsi alignés, parallèles.

A l'instar du mode de réalisation décrit en liaison avec les figures 3a, 3b et 3c, le mât correcteur 11 coopère avec des moyens d'accroche femelles (non représentés sur la figure 4) par une pluralité de haubans d'accroche. A titre d'exemple, en liaison avec la figure 4, cinq haubans d'accroche 13a, 13b, 13c, 13d et 13e dont les extrémités distales respectives 13ad, 13bd, 13cd, 13dd et 13ed coopèrent respectivement avec le mât correcteur 11 le long de ce dernier, c'est-à-dire entre ses extrémités 11i. Les extrémités proximales 13ap, 13bp, 13cp, 13dp et 13ep desdits haubans d'accroche sont quant à elles avantageusement réunies en un point 14d et coopèrent mutuellement avec la partie distale 14d d'un câble d'accroche 14, dont la partie proximale 14p coopère avec les moyens d'accroche femelles. Les longueurs respectives L13a, L13b, L13c, L13d et L13e des haubans d'accroche 13a, 13b, 13c, 13d et 13e sont mutuellement déterminées pour que le mât correcteur 11 soit automatiquement positionné puis maintenu vertical, lorsque le dispositif de traîne est tracté par un aéronef P, comme l'indique la figure 4. En outre, lesdites longueurs respectives L13a, L13b, L13c, L13d et L13e desdits haubans d'accroche sont déterminées pour définir une altitude relative donnée A30 de l'axe longitudinal des moyens supports 30, c'est-à-dire la médiatrice M, par rapport à la partie distale 14d du câble d'accroche 14 comme l'indique la vue latérale décrite par la figure 4.

En effet, si les longueurs des haubans d'accroche étaient déterminées de sorte que ces derniers décrivent une symétrie selon la médiatrice M du mât 11, l'altitude A30 serait nulle. En revanche, comme l'indique la figure 4, si lesdites longueurs L13a, L13b, L13c, L13d et L13e sont telles que le hauban 13a est le plus court et que les longueurs des haubans 13b, 13c, 13d et 13e sont croissantes, alors l'altitude moyenne des moyens supports 30, c'est-à-dire celle de la médiatrice M, est plus basse que celle du câble d'accroche 14. On peut donc ainsi régler l'altitude relative de l'axe longitudinal des moyens supports 30 par rapport à la partie distale 14d du câble d'accroche 14, tout en maintenant ledit mât 11 sensiblement vertical.

Compte tenu des longueurs respectives L13a, L13b, L13c, L13d et L13e des haubans d'accroche ainsi que celles L12a, L12b, L12c, L12d, L12e, L12e', L12d', L12c, L12b', L12a' des haubans de traction, sous l'action de la traction de l'aéronef P, le mât correcteur 11 se dresse en position verticale automatiquement. Le mât de traction se place également automatiquement en position verticale selon une assiette dont l'altitude relative A30 au regard du câble d'accroche, donc du câble de remorquage et par voie de conséquence de l'aéronef P, est déterminée. Comme l'indique à titre d'exemple la figure 4, une antenne 34, ou plus généralement un capteur de mesure, peut être avantageusement arrimée aux haubans de traction.

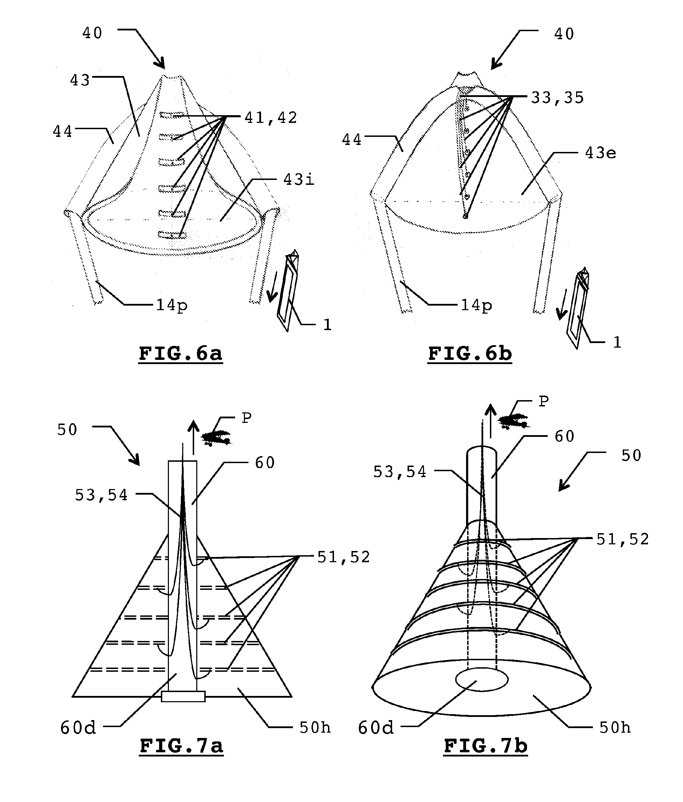

La figure 5 schématise une aire d'accrochage inédite d'un dispositif de traîne 1 selon l'invention. Par mesure de simplification, seule la partie proximale 14p du câble d'accroche 14 est représentée. Celle-ci est constituée d'une boucle fermée depuis un point 14f. L'extrémité ou tête de la boucle 14p coopère avec les moyens d'accroche 40. Comme décrit à titre d'exemple et de manière détaillée par la figure 6a, ces derniers peuvent consister avantageusement en un élément conique creux 43 dont la paroi externe 43e comporte un fourreau 44, agencé pour recevoir l'extrémité ou tête de la partie proximale 14p du câble d'accroche 14. En variante, ces moyens d'accroche femelles peuvent être agencés selon un deuxième exemple, illustré par la figure 6c, selon lequel un fourreau 44 coopère avec un membre 43 en chevron présentant deux feuillets latéraux 43a et 43b, avantageusement trapézoïdaux. De tels moyens d'accroche femelles 40 sont particulièrement agencés pour accueillir une crosse, telle que par exemple la crosse ou éperon 58a de moyens d'accroche mâles 50 tels que décrits en liaison avec la figure 7e, ou plus généralement des moyens d'accroche mâles d'un câble de remorquage tracté par un aéronef. Une telle coopération sera décrite plus loin en détails, en liaison avec la figure 8. La direction d'accroche D est représentée par une flèche sur la figure 5. Pour permettre la phase d'accrochage, l'invention prévoit de préparer une zone d'accrochage en y positionnant notamment en triangle trois poteaux 71, 72 et 73. Les deux premiers poteaux forment ainsi la base d'un triangle virtuel. Ils sont prévus pour étendre, c'est-à-dire écarter l'un de l'autre, les brins 14p de la boucle fermée formant la partie proximale du câble d'accroche 14. Les poteaux 71 et 72 comportent ainsi des guides ou attaches amovibles pour coopérer avec lesdits brins 14p. Le poteau 73 forme le sommet dudit triangle. Il coopère avec un câble de tension 73a dont la partie distale coopère avec les moyens d'accroche 40. A l'arrière de la base dudit triangle virtuel, le câble d'accroche 14 est étendu au sol et éventuellement enroulé sur lui-même. Les moyens supports 30 (non représentés sur la figure 5) sont éventuellement ferlés pour en réduire l'encombrement. Les mâts correcteur et de traction reposent au sol. Lors de l'accrochage, les brins 14p se désolidarisent automatiquement des poteaux 71 et 72. Préférentiellement muni d'attache(s) amovible(s) à au moins l'une de ses extrémités, le câble de tension 73a est désolidarisé du poteau 73 et/ou des moyens d'accroche femelles 40. En variante, ledit poteau 73 peut comporter une attache amovible pour se désolidariser du câble de tension 73a. Le dispositif de traîne 1 prend ainsi son envol tracté par un câble de remorquage. Les moyens correcteurs d'assiette prennent leur configuration de travail et les moyens supports du dispositif de traîne sont déployés.

Un dispositif de traîne conforme à l'invention peut être exploité dans de multiples applications. A des fins publicitaires ou pour matérialiser des cibles par exemple, il peut être requis de tracter des moyens supports passifs selon une assiette stable et déterminée. Pour ces mêmes applications et surtout pour collecter des mesures géophysiques, des éléments actifs, c'est-à-dire requérant une alimentation électrique et des voies de communication, peuvent être véhiculés par les moyens supports voire les moyens correcteurs d'assiette comme l'indique la figure 2. Les éléments actifs et communicants, tels qu'à titre d'exemples non limitatifs des afficheurs, des haut-parleurs ou des capteurs, peuvent être dotés de leurs propres sources électriques. Ils peuvent en variante coopérer avec des sources distantes, par exemple des cellules photovoltaïques, également véhiculées par les moyens supports 30. Lesdits éléments actifs peuvent communiquer entre eux, ou avec l'aéronef, selon des protocoles sans fils. Compte tenu des rayonnements électromagnétiques éventuellement émis par une antenne 31 véhiculée par les moyens supports, de tels protocoles sans fils peuvent ne pas être pertinents. Il est donc indispensable de prévoir un ou plusieurs bus de communication et d'alimentation pour acheminer énergies, messages et mesures, depuis l'aéronef vers le dispositif de traîne et réciproquement. Il est ainsi possible de transmettre des requêtes depuis un calculateur embarqué dans l'aéronef P à destination d'éléments actifs 31, 32 véhiculés par les moyens supports 30. Réciproquement, de tels bus permettent audit calculateur de collecter puis traiter des mesures prélevées par lesdits éléments actifs. Acheminer un bus le long des moyens supports voire le long de certains haubans ne soulève pas de réelles difficultés techniques. Les fils ou conducteurs électriques peuvent être fixés par touts moyens : couture, collage, tressage, etc. En revanche, compte tenu de l'ampleur des contraintes et sollicitations mécaniques découlant d'une phase d'accrochage du dispositif de traîne à un aéronef en vol via un câble de remorquage tracté par ce dernier, établir une connexion électrique entre ledit aéronef et ledit dispositif de traîne est d'une grande complexité. L'invention permet de vaincre ces difficultés techniques.

A ce titre, les figures 6a, 6b ou 6c illustrent des moyens d'accroche femelles 40 assurant simultanément une connexion physique, mécanique avec des moyens d'accroche mâles, tels que ceux décrits plus loin à titre d'exemple par les figures 7a à 7e, mais aussi une connexion électrique. A ce titre et selon un premier mode de réalisation décrit en liaison avec les figures 6a et 6b, la paroi interne 43i d'un élément conique creux 43 des moyens d'accroche 40 est réalisée à partir d'un ou plusieurs matériaux diélectriques. Elle comporte une pluralité de connecteurs électriques saillants 41, 42. Lesdits connecteurs peuvent être avantageusement positionnés selon une colonne depuis la base vers le somment de l'élément conique 43. Comme l'indique la figure 6b, représentant une vue de dessous (et/ou écorchée) des moyens 40, chaque connecteur 41, 42 est relié à la partie distale d'un conducteur ou fil électrique 33, 35, l'ensemble desdits fils constituant un bus de communication électrique. Les fils électriques 33, 35 sont par la suite guidés par le câble d'accroche 14. Celui-ci peut enceindre le bus de communication 33, 35. En variante, ledit câble d'accroche 14 peut consister en une structure fibreuse. La partie proximale du bus de communication 33, 35 peut dès lors être entrelacée avec les fibres dudit câble 14. On peut, par exemple, dédier un premier ensemble de conducteurs 33 associés respectivement à des connecteurs 41 à une communication descendante, c'est-à-dire à une communication établie depuis un calculateur embarqué dans l'aéronef vers une antenne émettrice. On parle alors de bus de communication descendant. De la même manière, on peut dédier un deuxième ensemble de conducteurs 35 associés respectivement à des connecteurs 42 à une communication ascendante, c'est-à-dire à une communication établie depuis une antenne réceptrice véhiculée par le dispositif de traîne vers un calculateur embarqué dans l'aéronef. On parle alors de bus de communication ascendant ou montant.

Les figures 7a et 7b décrivent un premier mode de réalisation de moyens d'accroche mâles 50 coopérant avec un câble de remorquage 60 pour aéronef. Ces moyens d'accroche mâles 50 sont prévus pour coopérer avec des moyens d'accroche femelles 40 d'un dispositif de traîne 1 conforme à l'invention comme l'indique à titre d'exemple la figure 8. Les moyens d'accroche mâles 50 coopèrent avantageusement avec la partie distale 60d du câble de remorquage 60 sous la forme d'une platine 50h agencée avantageusement conique. Avantageusement, l'extrémité distale 60d du câble 60 coopère avec la base de la platine. Les deux éléments peuvent être sertis ou fixés par tous moyens, de sorte que la platine 50h puisse être montée solidement sur la partie distale 60d du câble 60 et qu'elle puisse supporter l'effort d'accroche puis la force de traction du dispositif de traîne. Dans le cas où le dispositif de traîne comporte des éléments actifs communicants avec l'aéronef tracteur, le câble de remorquage 60, et par conséquent la platine 50h, sont respectivement agencés pour véhiculer un ou plusieurs bus de communication 53 et/ou 54. De tels bus consistent respectivement en un ou plusieurs conducteurs électriques enceints dans les éléments 60 et 50. En variante, les conducteurs 53 et/ou 54 peuvent être guidés par ledit câble 60, lesdits conducteurs étant simplement attachés le long dudit câble. Avantageusement, le câble de remorquage comporte une âme sous la forme d'un filin, dont la fonction consiste à supporter la force de traction, et une gaine qui enceint ladite âme et les conducteurs électriques. On peut donc véhiculer de manière fiable un bus de communication ascendant 53 et/ou un bus de communication ascendant. Lesdits bus 53 et 54 sont respectivement connectés aux bus de communication 33 et 35 décrits en liaison avec la figure 6b par l'intermédiaire des moyens d'accroche femelles 40 et mâles 50. Pour cela, la platine 50h comporte des connecteurs électriques 51 et/ou 52 débouchant de la paroi externe diélectrique de ladite platine 50h. Lesdits connecteurs électriques matérialisent la partie distale du ou des bus de communication véhiculés par ledit câble de remorquage. A titre préféré, les connecteurs électriques 51 et 52 consistent respectivement en des anneaux concentriques disjoints. Un tel agencement permet d'assurer une bonne coopération entre les connecteurs 41 et 42 des moyens d'accroche femelles et les connecteurs 51 et 52 de la platine 50h, indépendamment de l'orientation de la platine conique 50h, lors de son insertion au sein des moyens d'accroche femelles 40, comme l'indique la figure 8.

Considérons un attelage tel que celui-ci décrit en liaison avec les figures 1a ou 1b. Comme l'indique à titre d'exemple la figure 5, lors d'une phase d'accroche du dispositif de traîne 1 à l'aéronef tracteur P, la vitesse de l'aéronef P au regard du sol est proche de 150km/h. Bien que généralement l'aéronef P cabre franchement pour réduire ladite vitesse au regard du sol, celle-ci reste toutefois supérieure à 100km/h. Lorsque le câble d'accroche 14 se tend après l'insertion des moyens d'accroche mâles 50 au sein des moyens d'accroche femelles 40, respectivement du câble de remorquage 60 et du dispositif de traîne 1, les sollicitations mécaniques sont intenses et sont transmises à tout l'attelage au risque de provoquer une rupture mécanique. Ce phénomène est aggravé par les dimensions inhabituelles d'un dispositif de traîne agencé notamment pour collecter des mesures géophysiques, de telles dimensions pouvant atteindre plusieurs centaines voire milliers de mètres carrés.

L'invention prévoit ainsi des moyens d'accroche mâles comportant des moyens amortisseurs d'accrochage dont la fonction consiste à accompagner l'accrochage et ainsi « adoucir » celui-ci. Les composants ou organes mécaniques de l'attelage, c'est-à-dire, de manière non exhaustive, les câbles, les haubans, les mâts, sont ainsi préservés. En variante ou en complément, le câble d'accroche 14 d'un dispositif de traîne peut comporter des moyens amortisseurs d'accrochage.

A titre de premier exemple de réalisation, les figures 7c et 7d décrivent des moyens d'accroche mâles, proches de ceux décrits précédemment en liaison avec les figures 7a et 7b. Les moyens d'accroche mâles 50 se présentent avantageusement sous la forme d'une platine conique 50h. Celle-ci comporte un conduit interne longitudinal débouchant au somment et à la base de la platine 50h. Celle-ci est ainsi montée mobile sur le câble de remorquage 60. La partie distale 60d dudit câble de remorquage coopèrent avantageusement avec la base de la platine 50h via un ressort hélicoïdal 55 monté radial, ou tout autre moyen délivrant une fonction équivalente. Les extrémités dudit ressort 55 sont contraintes par la partie distale du câble 60, celle-ci étant évasée ou comportant une butée et une bague 56 positionnée contre la base conique. Après accrochage, lorsque la platine 50h coopère avec des moyens d'accroche femelles 40 du dispositif de traîne, le ressort 55 se bande jusqu'à son écrasement absorbant ainsi une partie de l'effort d'accroche et/ou la force de traction du dispositif de traîne. Dans le cas où le dispositif de traîne comporte des éléments actifs communicants avec l'aéronef tracteur, le câble de remorquage 60, et par conséquent la platine 50h, sont respectivement agencés pour véhiculer un ou plusieurs bus de communication 53 et/ou 54 coopérant avec des connecteurs conducteurs concentriques 51 et 52, à l'instar de la précédente description en liaison avec les figures 7a et 7b.

L'invention prévoit un deuxième exemple de réalisation de moyens d'accroche mâles 50 coopérant avec la partie distale 60d d'un câble de remorquage, lesdits moyens comportant des moyens amortisseurs d'accrochage.

Un tel agencement est décrit en liaison avec la figure 7e. Des moyens d'accroche mâles 50 comportent une crosse ou un éperon 58a monté(e) mobile sur la partie distale du câble de remorquage 60. L'extrémité distale 60d dudit câble 60 est fixée ou coopère selon une liaison encastrement avec un talon 58b. La crosse 58a coopère avec, ou comporte, une platine 50h présentant deux feuillets avantageusement trapézoïdaux 50a et 50b, tel un chevron dont le sommet est opposé à l'extrémité distale 60d du câble 60 et coopère avec la crosse 58a ou fait partie de ladite crosse 58a. Ladite platine 50h comportant les feuillets 50a et 50b est ainsi creuse, laissant coulisser en son sein, le talon 58b sous l'action de la traction du câble de remorquage 60, jusqu'à ce que ledit talon 58b entre en contact avec le sommet interne de ladite platine 50h, prenant appui contre celui-ci. Pour freiner la course du talon 58b et ainsi absorber la force d'accrochage d'un dispositif de traîne lorsque les moyens d'accroche mâles 50 coopèrent avec les moyens d'accroche 40 dudit dispositif de traîne, la crosse 58a coopère avec le talon 58b par l'intermédiaire d'un vérin pneumatique ou hydraulique. Le cylindre 55a est avantageusement monté fixe sur le talon 58b. Le piston 55b est quant à lui monté fixe sur la crosse 58a. Lors du déplacement du talon 58b vers la crosse 58a, le piston comprime un gaz ou un fluide contenu dans le cylindre 55a. Avantageusement, celui-ci est empli d'eau, suffisamment pour assurer l'effort d'absorption recherché. Le cylindre du vérin peut comporter une ou plusieurs petites ouvertures ou valves de sorte que l'eau compressée soit expulsée lors de la course du piston 55b dans le cylindre 55a. L'eau peut être remplacée par tout autre fluide. L'eau présente toutefois l'avantage de ne pas soulever de risque de pollution lors de son expulsion. A l'issue de ladite course, la chambre du cylindre 55a est vide, réduisant ainsi le poids des moyens d'accroche 50. Le cylindre 55a pourra être de nouveau rempli pour un futur accrochage d'un dispositif de traîne.

A l'instar des moyens d'accroche 50 décrits précédemment en liaison avec les figures 6a à 6d, les moyens 50 décrits en liaison avec la figure 7e peuvent en outre comporter des connecteur électriques 51 et 52, en tant que partie distale de bus de communication transitant via le câble de remorquage. Ces connecteurs sont avantageusement positionnés sur les parois externes 50e des feuillets 50a et 50b. Ladite paroi externe 50e est dans ce cas avantageusement diélectrique.

Pour coopérer avec de tels moyens d'accroche mâles 50, décrits en liaison avec la figure 7e, l'invention prévoit un deuxième mode de réalisation de moyens d'accroche femelles 40, comme par exemple les moyens 40 décrits en liaison avec la figure 6c. Lesdits moyens d'accroche femelles 40 sont globalement similaires à ceux décrits en liaison avec les figures 6a et 6b. Ils diffèrent toutefois par l'agencement du membre 43. La configuration de celui-ci est sensiblement proche de celle du membre comportant les feuillets 50a et 50b des moyens 50 décrits par la figure 7e. Deux feuillets 43a et 43b coopèrent, du moins leurs parois extérieures 43e, avec un fourreau 44. Ce dernier coopère avec la partie proximale 14p du câble de traction 14. Le chevron ainsi créé par les feuillets 43a et 43b, dont le sommet peut en outre coopérer avec le fourreau 44, est agencé pour accueillir en son sein la crosse 58a puis les feuillets 50a et 50b des moyens d'accroche mâles 50. Le fourreau 44 et le membre 43 peuvent consister en une seule et même entité ou en variante coopérer par tous moyens, c'est-à-dire, de manière non exhaustive, par couture, collage, soudure. Dans le cas où les moyens d'accroches 40 et 50 doivent assurer en outre une connexion électrique, les parois internes 43i des feuillets 43a et 43b comportent avantageusement des connecteurs électriques présentant des plages respectives de contact avec les connecteurs 51 et/ou 52 des moyens d'accroche 50 précédemment décrits. L'action du talon 58b au sein des feuillets 50a et 50b provoque un écartement des parties distales desdits feuillets, provoquant à son tour une force de contact contre les connecteurs électriques 42 et/ou 42 des moyens d'accroche femelles 40. Le câble d'accroche 14 dont la partie proximale 14p coopère avec le fourreau 44, applique quant à lui une force tendant à rapprocher les parties distales des feuillets 43a et 43b. La connexion électrique entre les connecteurs électriques des moyens 40 et 50 est ainsi assurée.

La traction par l'aéronef du dispositif de traîne au travers du câble de remorquage maintient ainsi fermement les moyens d'accroche 50 au sein des moyens d'accroche femelles 40. Toutefois, l'invention prévoit que lesdits moyens d'accroche 40 et 50 puissent comporter des moyens pour verrouiller leur coopération mutuelle après accrochage du dispositif de traîne.

Par ailleurs, les capacités de connexions mécanique et/ou électrique des moyens d'accroche femelles 40 et mâles 50, décrits à titre d'exemples non limitatifs en liaison avec les figures 6a, 6b, 6c, 7a et 7b, peuvent être mises à profit pour tracter un dispositif de traîne par un aéronef, quand bien même ledit dispositif de traîne ne comporte pas de moyens correcteurs d'assiette. Il en est de même pour la capacité d'amortissement d'accrochage pour des moyens d'accroche mâles, décrits à titre d'exemples non limitatifs en liaison avec les figures 7c, 7d, et 7e, d'un câble de remorquage prévu pour tracter un dispositif de traîne passif, c'est-à-dire ne nécessitant pas de connexion électrique, et/ou ne comportant pas de moyens correcteurs d'assiette.

Un attelage conforme à l'invention comporte ainsi un aéronef P, un câble de remorquage 60 et un dispositif de traîne 1, l'aéronef tractant via ledit câble de remorquage le dispositif de traîne. Un tel attelage a été décrit au travers d'une application préférée en lien avec le domaine de la cartographie géophysique. Les dimensions des moyens supports d'un dispositif de traîne selon l'invention permettent de véhiculer, sur une surface aéroportée inégalée à ce jour, des capteurs permettant d'effectuer, durant un même vol d'acquisition, des sondages électromagnétiques d'un sous-sol, dans le domaine fréquentiel (FDEM ou *Frequency-Domain ElectroMagnetic induction,* selon une terminologie anglo-saxonne), par des mesures d'amplitude et de phase d'un champ électromagnétique induit, ainsi que du temps de décroissance d'impulsions électromagnétiques induites (TDEM ou *Time-Domain ElectroMagnetic induction,* selon une terminologie anglo-saxonne). La profondeur d'inspection des formations d'un sous-sol est directement liée aux dimensions des antennes émettrices et réceptrices véhiculées. L'invention permet ainsi de prospecter avec précision et pertinence dans des reliefs extrêmement tourmentés, tels que des montagnes par exemple.

Toutefois, un dispositif de traîne conforme à l'invention peut être totalement passif, c'est-à-dire ne nécessitant aucune connexion électrique entre l'aéronef tracteur P et le dispositif de traîne 1. En configuration active, c'est-à-dire selon laquelle le dispositif de traîne 1 nécessite une communication électrique avec un calculateur embarqué dans l'aéronef P, un attelage selon l'invention peut être exploité dans toutes autres applications telles que, par exemple, la géomatique, la publicité aérienne ou la surveillance aéroportée.

L'aéronef est avantageusement un avion léger.

L'attelage pourraient en variante comporter un hélicoptère ou toute autre unité volante apte à tracter un dispositif de traîne.

## Revendications

1. Procédé pour accrocher un dispositif de traîne (1) à un aéronef (P), le dispositif de traîne comprenant des moyens support (30) souples se déployant sous l'effet de la traction, comprenant les étapes consistant à :
- prévoir un câble d'accrochage (14) attaché au dispositif de traîne (1), ayant une extrémité formant une boucle fermée et comprenant une tête de boucle (14p),
- prévoir un premier moyen d'accrochage (40) attaché à la tête de boucle (14p) du câble d'accrochage et comprenant des premiers connecteurs électriques (41, 42)
- prévoir un câble de remorquage (60) attaché à l'aéronef, et
- prévoir un deuxième moyen d'accrochage (50) attaché à une extrémité du câble de remorquage, comprenant des deuxièmes connecteurs électriques (51, 52) prévus pour coopérer avec les premiers connecteurs électriques (41, 42),
- poser au sol le dispositif de traîne,
- au moyen d'attaches ou de guides, maintenir au-dessus du sol la tête de boucle (14p) du câble d'accrochage (14),
- passer au-dessus de la zone d'accrochage avec l'aéronef en vol traînant le deuxième moyen d'accrochage (50), engager le deuxième moyen d'accrochage (50) dans la boucle du câble d'accrochage (14), pour amener le deuxième moyen d'accrochage (50) à coopérer mécaniquement et électriquement avec premier moyen d'accrochage (40) attaché à la tête de boucle.

2. Procédé selon la revendication 1, comprenant une étape consistant à prévoir deux poteaux (71, 72) munis d'attaches ou de guides pour maintenir au-dessus du sol et écarter l'un de l'autre deux brins (14p) de la tête de boucle du câble d'accrochage (14).

3. Procédé selon l'une des revendications 1 et 2, comprenant une étape consistant à maintenir le premier moyen d'accrochage (40) au moyen d'un câble de tension (73a) attaché à un poteau (73), le câble de tension étant attaché au poteau (73) ou au premier moyen d'accrochage (40) de manière amovible.

4. Procédé selon l'une des revendications 1 à 3, comprenant une étape consistant à prévoir dans le premier moyen d'accrochage (40) un élément creux (43) recevant des premiers connecteurs électriques (41, 42, 51, 52), et à prévoir dans le deuxième moyen d'accrochage (50) des deuxièmes connecteurs électriques (51, 52) configurés pour coopérer avec les premiers connecteurs électriques.

5. Procédé selon l'une des revendications 1 à 4, comprenant une étape consistant à prévoir des moyens amortisseurs d'accrochage (55, 55a, 55b, 56) dans le deuxième moyen d'accrochage (50) ou à l'extrémité du câble de remorquage (60).

6. Procédé selon la revendication 5, comprenant une étape consistant à prévoir une crosse (58a) montée mobile sur le câble de remorquage (60) et un talon (58b) monté fixe sur le câble de remorquage, le talon (58b) coulissant dans le deuxième moyen d'accrochage (50) sous l'action de la traction du câble de remorquage jusqu'à prendre appui contre un sommet du deuxième moyen d'accrochage.

7. Procédé selon la revendication 6, comprenant une étape consistant à prévoir, dans le deuxième moyen d'accrochage (50), un vérin amortisseur d'accrochage comprenant un cylindre (55a) monté fixe sur le talon (58b) et un piston (55b) monté fixe sur la crosse (58a).

8. Dispositif pour accrocher à un aéronef (P) en vol un dispositif de traîne (1) posé au sol et comprenant des moyens support (30) souples se déployant lorsqu'ils sont remorqués, le dispositif comprenant :
- un câble d'accrochage (14) attaché au dispositif de traîne (1), ayant une extrémité formant une boucle fermée et comprenant une tête de boucle (14p),
- un premier moyen d'accrochage (40) attaché à la tête de boucle (14p) du câble d'accrochage, comprenant des premiers connecteurs électriques (41, 42)
- un câble de remorquage (60) attaché à l'aéronef,
- un deuxième moyen d'accrochage (50) attaché à une extrémité du câble de remorquage, conçu pour coopérer mécaniquement et électriquement avec le premier moyen d'accrochage (40) et comprenant des deuxièmes connecteurs électriques (51, 52) prévus pour coopérer avec les premiers connecteurs électriques (41, 42), et
- des attaches ou des guides pour maintenir au-dessus du sol la tête de boucle (14p) du câble d'accrochage (14).

9. Dispositif selon la revendication 8, comprenant en outre deux poteaux (71, 72) munis d'attaches ou de guides pour maintenir au-dessus du sol et écarter l'un de l'autre deux brins (14p) de la tête de boucle du câble d'accrochage (14).

10. Dispositif selon l'une des revendications 8 et 9, comprenant en outre un câble de tension (73a) attaché à un poteau (73) pour maintenir le premier moyen d'accrochage (40) avant l'accrochage du dispositif de traîne à l'aéronef, le câble de tension étant attaché un poteau (73) ou au premier moyen d'accrochage (40) de manière amovible.

11. Dispositif selon l'une des revendications 8 à 10, dans lequel le premier moyen d'accrochage (40) comprend un élément creux (43) recevant des premiers connecteurs électriques (41, 42, 51, 52), et le deuxième moyen d'accrochage (50) comprend des deuxièmes connecteurs électriques (51, 52) configurés pour coopérer avec les premiers connecteurs électriques.

12. Dispositif selon l'une des revendications 8 à 11, comprenant des moyens amortisseurs d'accrochage (55, 55a, 55b, 56) prévus dans le deuxième moyen d'accrochage (50) ou à l'extrémité du câble de remorquage (60).

13. Dispositif selon la revendication 12, dans lequel le deuxième moyen d'accrochage (50) comprend une crosse (58a) montée mobile sur le câble de remorquage (60) et un talon (58b) monté fixe sur le câble de remorquage, le talon (58b) coulissant dans le deuxième moyen d'accrochage (50) sous l'action de la traction du câble de remorquage jusqu'à prendre appui contre un sommet du deuxième moyen d'accrochage.

14. Dispositif selon la revendication 13, dans lequel le deuxième moyen d'accrochage (50) comprend en outre un vérin amortisseur d'accrochage comprenant un cylindre (55a) monté fixe sur le talon (58b) et un piston (55b) monté fixe sur la crosse (58a).

15. Dispositif selon l'une des revendications 8 à 14, dans lequel le dispositif de traîne comporte un mât de traction (20) auquel sont fixés les moyens support souples (30), un mât correcteur d'assiette (11), des haubans de traction (12a) reliant le mât correcteur d'assiette (11) au mât de traction, et des haubans d'accrochage (13) reliant le mât correcteur d'assiette (11) à une extrémité du câble d'accrochage (14) opposée à celle formant une boucle fermée (14p).

16. Dispositif selon la revendication 15, comprenant des haubans de traction (12a) reliant respectivement une première extrémité du mât correcteur d'assiette (11) à deux extrémités opposées du mât de traction, et une deuxième extrémité du mât correcteur d'assiette aux deux extrémités opposées du mât de traction, pour conférer une assiette horizontale au mât de traction (20) lorsque le mât correcteur d'assiette est dans la position verticale.

17. Dispositif selon l'une des revendications 15 et 16, dans lequel les haubans d'accrochage (13) présentent des longueurs respectives différentes et non symétriques relativement à une médiatrice (M) du mât correcteur d'assiette (11), de telle sorte que le mât correcteur d'assiette est automatiquement positionné puis maintenu vertical lorsque le dispositif de traîne est tracté par l'aéronef (P).
